# EUROPEAN PATENT SPECIFICATION

(11) **EP 1 372 397 B1**
(45) Date of publication and mention of the grant of the patent: **26.07.2006**
(21) Application number: 02715066.3
(22) Date of filing: 07.03.2002
(51) Int. Cl.: A01N 59/00, C02F 1/76

(54) **CONTROL OF PSEUDOMONAS AERUGINOSA**
BEKÄMPFUNG VON PSEUDOMONAS AERUGINOSA
LUTTE CONTRE PSEUDOMONAS AERUGINOSA

(30) Priority: 27.03.2001 US 819153
(43) Date of publication of application: 02.01.2004
(73) Proprietor: ALBEMARLE CORPORATION, Baton Rouge, LA 70801-1765 (US)
(72) Inventor: NALEPA, Christopher, J., Baton Rouge, LA 70816 (US)
(74) Representative: UEXKÜLL & STOLBERG
(86) International application number: PCT/US2002/007013
(87) International publication number: WO 2002/076214

(56) References cited:
- EP-A- 0 913 091
- WO-A-01/20996
- WO-A-01/53209
- WO-A-97/34827
- WO-A-99/62339
- US-A- 4 297 224
- CLARK C F ET AL: "THE SURVIVAL OF PSEUDOMONAS-AERUGINOSA DURING BROMINATION IN A MODEL WHIRLPOOL SPA" LETTERS IN APPLIED MICROBIOLOGY, vol. 14, no. 1, 1992, pages 10-12, XP008006779 ISSN: 0266-8254
- MAY L L ET AL: "Relative effect of activated sodium bromide and bromocholorodimethyl hydantioin on biofilms of selected microorganisms." ABSTRACTS OF THE GENERAL MEETING OF THE AMERICAN SOCIETY FOR MICROBIOLOGY, vol. 100, 2000, page 578 XP008006765 100th General Meeting of the American Society for Microbiology;Los Angeles, California, USA; May 21-25, 2000, 2000 ISSN: 1060-2011

## Description

*Pseudomonas aeruginosa* is a strain of bacteria which can form biofilm on surfaces in contact with water. As is well recognized in the art, biofilms are more resistant to the action of microbiocides than are planktonic bacteria *i.e.,* bacteria which are not attached to a surface. In this connection, *Pseudomonas aeruginosa* is an especially tenacious biofilm former in that it is highly resistant to chemical removal. In addition, *Pseudomonas aeruginosa* has the ability of protecting itself against the action of microbiocides by forming extracellular polysaccharide slime layers which resist penetration of water-borne microbiocides. The rate at which such slime layers is formed is quite rapid in the case of *Pseudomonas aeruginosa* - highly resistant slime layers can be formed on a clean surface in less than one week. In addition, biofilms of *Pseudomonas aeruginosa* typically harbor dangerous pathogens, and cause damage to the surfaces to which they have become attached.

WO 01/20996, which was published after the priority date of the present application, discloses methods for disinfecting surfaces and for sanitizing bodies of water using a concentrated liquid biocide composition which is formed by mixing together (a) bromine chloride and (b) an aqueous solution of alkali metal salt of sulfamic acid having a pH of at least about 7, in amounts such that (i) the active bromine content of the composition is at least about 100,000 ppm (wt/wt), and (ii) the atom ratio of nitrogen to active bromine in the composition is greater than 0.93. WO 01/53209, which was published after the priority date of the present patent, teaches that microbiological control in water systems is achieved with an amount of 1,3-dibromo-5,5-dimethylhydantoin that is less than the amount of N,N'-bromochloro-5,5-dimethylhydantoin required to achieve the same degree of microbiological control. WO 97/34827 discloses a method for preparing a stabilized aqueous alkali or alkaline earth metal hypobromite solution from an aqueous solution of alkali or alkaline earth metal hypochlorite and a water-soluble bromide ion source, followed by adding an alkali metal sulfamate to the mixture. This stabilized aqueous alkali or alkaline earth metal hypobromite solution has antibacterial properties. EP 0913091 teaches a synergistic composition which comprises a combination of stabilized sodium hypobromite with a mixture of 5-chloro-2-methyl 4-isothiazolin-3-one and 2-methyl-4-isothiazolin-3-one. This composition is used for inhibiting microbiological growth. U.S. 4,297,224 discloses that biofouling in recirculating water systems may be controlled by providing 1-bromo-3-chloro-5, 5-dimethylhydantoin to the water at a level effective to control biological film-forming organisms. WO 99/62339 discloses a process for producing a concentrated liquid biocide formulation by mixing together (a) bromine chloride or bromine and (b) an aqueous solution of alkali metal salt of sulfamic acid having a pH of at least about 7, in amounts such that (i) the active bromine content of the solution is at least about 100,000 ppm (wt/wt), and (ii) the atom ratio of nitrogen to active bromine from (a) and (b) is greater than 1 when bromine is used and is greater than 0.93 when bromine chloride is used. Clark and Smith, *Letters in Applied Microbiology,* 1992, **14**, 10-12, shows that 1-bromo-3-chloro-5,5-dimethylhydantoin can be used against *Pseudomonas aeruginosa* in a whirlpool spa. In May et al., *Abstracts of the General Meeting of the American Society for Microbiology,* 2000, vol. 100, page 578, the use of bromochlorodimethylhydantoin and sodium bromide with oxidizing chlorine against biofilms is taught.

An object of this invention is to provide an effective way of controlling *Pseudomonas aeruginosa* even after it has formed and extracellular polysaccharide slime layer.

Pursuant to this invention, it has been found that a certain bromine containing biocide is effective in controlling *Pseudomonas aeruginosa* on water exposed surfaces even after an extracellular polysaccharide defensive layer has been produced by the bacteria species.

The bromine based microbiocide used pursuant to this invention is at least one water-soluble active bromine product formed by mixing (a) bromine, bromine chloride, a mixture of bromine chloride and bromine or a combination of bromine and chlorine in which the molar amount of chlorine does not exceed the molar amount of bromine, and (b) a water-soluble source of sulfamate anion, in (c) an aqueous medium, which aqueous medium is adjusted to a pH of at least 12 and preferably at least 13 either during or after such mixing.

Said microbiocides can be prepared as described, for example, in U.S. Pat. No. 6,068,861. A concentrated solution of sulfamate-stabilized bromine chloride is available in the marketplace under the trade designation Stabrom® 909 biocide (Albemarle Corporation).

In the practice of this invention the above bromine-based microbiocide can be applied to the biofilm either by adding the microbiocide to the aqueous medium in contact with the biofilm or, in the case of surfaces which can be removed from the aqueous medium with which they are normally in contact, by contacting the biofilm with an aqueous solution of the microbiocide. In either case, the amount of microbiocide used is a microbiocidally effective amount which to some extent will vary depending upon the identity of the microbiocide being used and the age of the biofilm colony. In this connection, the greater the age of a colony of *Pseudomonas aeruginosa* biofilm the more resistant it is to the action of the microbiocide and thus in general the greater should be the dosage level of the microbiocide. Generally speaking, biocidally effective concentrations in water whether dissolved in the water by any suitable means or be direct application from an aqueous solution should be at least in the range of 2 to 200 ppm (wt/wt) and preferably in the range of 5 to 20 ppm (wt/wt). Departures from the foregoing ranges can be made whenever deemed necessary or desirable under the particular circumstances at hand, and such departures are within the scope of this invention. The duration of the exposure to the aqueous microbiocidal medium used pursuant to this invention can be as little as a few minutes up to hours or even days, depending upon the age of the colony of *Pseudomonas aeruginosa* biofilm. That is, the older the colony, the longer should be the contact time.

The efficacy of this invention in eradicating (*i.e.* controlling) *Pseudomonas aeruginosa* biofilm of sufficient age such that it had developed an extracellular polysaccharide protective slime layer, was shown by a series of standard tests performed on our behalf at MBEC Biofilm Technologies, Inc., Calgary, Canada. The test procedure, developed at the University of Calgary, utilizes a device which allows the growth of 96 identical biofilms under carefully controlled conditions. The device consists of a two-part vessel comprised of an upper plate containing 96 pegs that seals against a bottom plate. The bottom plate can consist of either a trough (for biofilm growth) or a standard 96-well plate (for biocide challenge). The biofilms develop on the 96 pegs. The device has been used as a general method for evaluating the efficacy of antibiotics and biocides towards biofilms. See in this connection H. Ceri, et al., "The MBEC Test: A New *In Vitro* Assay Allowing Rapid Screening for Antibiotic Sensitivity of Biofilm", *Proceedings of the ASM,* **1998*****,** 89,* 525; Ceri, et al., "Antifungal and Biocide Susceptibility testing of Candida Biofilms using the MBEC Device", *Proceedings of the Interscience Conference on Antimicrobial Agents and Chemotherapy,* 1998*,* 38, 495; and H. Ceri, et al., "The Calgary Biofilm Device: A New Technology for the Rapid Determination of Antibiotic Susceptibility of Bacterial Biofilms", *Journal of Clinical Microbiology,* **1999**, *37,*1771-1776.

Six biocide systems were evaluated using the above test procedure and test equipment. Five of these systems were oxidizing biocides, viz., chlorine (from NaOCl), bromine (from NaOCl + NaBr), bromine and chlorine (from BCDMH), bromine (from sulfamate stabilized bromine chloride), and chlorine (from trichloroisocyanuric acid), all expressed as bromine (Br₂) in mg/L, so that all test results were placed on the same basis. The sixth biocide was glutaraldehyde, a non-oxidizing biocide.

These biocide systems were used to challenge biofilms of *Pseudomonas aeruginosa* (ATCC 15442). This is a Gram (-) bacterium which is known to rapidly develop an extracellular polysaccharide slime layer, and is found in industrial and recreational water systems. See in this connection J.W. Costerton and H. Anwar, *"Pseudomonas aeruginosa:* The Microbe and Pathogen", in *Pseudomonas aeruginosa Infections and Treatment,* A.L. Baltch and R.P. Smith editors, Marcel Dekker publishers, New York, 1994.

In the Table the MBEC (minimum biofilm eradication concentration) results presented are for the one-hour biocide contact time used in the test. The Pseudomonas aeruginosa colony was allowed to grow in contact with a nutrient solution for seven days. The values given for the halogen containing biocides are expressed in terms of mg/L of bromine as Br₂. The data on the glutaraldehyde is in terms of mg/L as active ingredient. The data indicate that the bromine-based microbiocide used pursuant to this invention was surpisingly more effective against the *Pseudomonas aeruginosa* biobilm than the others including chlorine-based microbiocides, as well as the glutaraldehyde biocide.

**TABLE - EFFECTIVENESS AGAINST PSEUDOMONAS AERUGINOSA BIOFILM**

| Biocide System | MBEC, ppm as Br₂, on 7-day old biofilm | MBEC, avg. |
|---|---|---|
| Bromine from stabilized BrCl | 5, 5 | 5 |
| Bromine (from NaOCl + NaBr) | 5, 10 | 7.5 |
| Bromine and chlorine (from BCDMH) | 5, 10 | 7.5 |
| Chlorine (from NaOCl) | 20, 20 | 20 |
| Chlorine (from Trichloroisocyanuric acid) | 20, 20 | 20 |
| Glutaraldehyde | 100, >200 | 200 (est.) |

Compounds referred to by chemical name or formula anywhere in this document, whether referred to in the singular or plural, are identified as they exist prior to coming into contact with another substance referred to by chemical name or chemical type (*e.g.,* another component or a solvent). It matters not what preliminary chemical changes, if any, take place in the resulting mixture or solution, as such changes are the natural result of bringing the specified substances together under the conditions called for pursuant to this disclosure. Also, even though the claims may refer to substances in the present tense (*e*.*g*., "comprises" or "is"), the reference is to the substance as it exists at the time just before it is first contacted, blended or mixed with one or more other substances in accordance with the present disclosure.

## Claims

1. A method of eradicating or at least reducing Pseudomonas aeruginosa biofilm on a surface, said biofilm containing extracellular polysaccharide, which method comprises contacting said biofilm with an aqueous medium or water into which has been introduced a microbiocidally effective amount of at least one water-soluble active bromine product formed by mixing (a) bromine, bromine chloride, a mixture of bromine chloride and bromine or a combination of bromine and chlorine in which the molar amount of chlorine does not exceed the molar amount of bromine, and (b) a water-soluble source of sulfamate anion, in (c) an aqueous medium, which aqueous medium is adjusted to a pH of at least 12 either during or after such mixing, said contacting being for one or more periods long enough to eradicate or at least reduce said biofilm and wherein said contacting between said biofilm and said aqueous microbicidal medium depends upon the age of the colony of Pseudomonas aeruginosa biofilm and the older the colony, the longer the contact time is.

2. A method of claim 1 wherein said biofilm comprises at least one additional pathogenic organism.

3. A method of claim 1 or 2 wherein (a) used in said mixing is bromine chloride.

4. A method of eradicating or at least reducing Pseudomonas aeruginosa biofilm on a surface, said biofilm containing extracellular polysaccharide, which method comprises adding to the aqueous medium in contact with said biofilm a microbiocidally effective amount of at least one water-soluble active bromine product formed by mixing (a) bromine, bromine chloride, a mixture of bromine chloride and bromine or a combination of bromine and chlorine in which the molar amount of chlorine does not exceed the molar amount of bromine, and (b) a water-soluble source of sulfamate anion, in (c) an aqueous medium, which aqueous medium is adjusted to a pH of at least 12 either during or after such mixing, said contacting being for one or more periods long enough to eradicate or at least reduce said biofilm and wherein said contacting between said biofilm and said aqueous microbicidal medium depends upon the age of the colony of Pseudomonas aeruginosa biofilm and the older the colony, the longer the contact time is.

5. A method of claim 4 wherein said biofilm comprises at least one additional pathogenic organism.

6. A method of claim 4 or 5 wherein (a) used in said mixing is bromine chloride.

7. Use of at least one water-soluble active bromine product formed by mixing (a) bromine, bromine chloride, a mixture of bromine chloride and bromine or a combination of bromine and chlorine in which the molar amount of chlorine does not exceed the molar amount of bromine, and (b) a water-soluble source of sulfamate anion, in (c) an aqueous medium, which aqueous medium is adjusted to a pH of at least 12 either during or after such mixing, to eradicate or at least reduce *Pseudomonas aeruginosa* biofilm on a surface, said biofilm containing extracellular polysaccharide, by way of contacting said biofilm with an aqueous medium or water into which has been introduced a microbiocidally effective amount of said water-soluble active bromine product, said contacting being for one or more periods long enough to eradicate or at least reduce said biofilm and wherein said contacting between said biofilm and said aqueous microbicidal medium depends upon the age of the colony of Pseudomonas aeruginosa biofilm and the older the colony, the longer the contact time is.

8. Use according to claim 7 wherein (a) used in said mixing is bromine chloride.

## Patentansprüche

1. Verfahren zum Ausrotten oder zumindest Reduzieren eines Pseudomonas aeruginosa-Biofilms auf einer Oberfläche, wobei der Biofilm extrazelluläres Polysaccharid enthält, wobei das Verfahren das Inkontaktbringen des Biofilms mit einem wässrigen Medium oder Wasser umfaßt, in das eine mikrobiozid wirkende Menge mindestens eines in Wasser löslichen wirksamen Bromprodukts eingeführt worden ist, das gebildet worden ist, indem (a) Brom, Bromchlorid, eine Mischung aus Bromchlorid und Brom oder eine Kombination von Brom und Chlor, in der die molare Menge von Chlor nicht die molare Menge von Brom übersteigt, und (b) eine wasserlösliche Quelle von Sulfamatanion in (c) einem wässrigen Medium, das ein wässriges Medium ist, das auf einen pH-Wert von mindestens 12 entweder während oder nach dem Vermischen eingestellt worden ist, gemischt werden wobei das Inkontaktbringen eine oder mehrere Perioden lang erfolgt, die lang genug sind, um den Biofilm auszurotten oder mindestens zu reduzieren, und bei dem das Inkontaktbringen zwischen dem Biofilm und dem wässrigen mikrobiziden Medium von dem Alter der Kolonie des Pseudomonas aeruginosa-Biofilms abhängt, und je älter die Kolonie ist, desto länger ist die Kontaktzeit.

2. Verfahren nach Anspruch 1, bei dem der Biofilm mindestens einen zusätzlichen krankheitserregenden Organismus umfaßt.

3. Verfahren nach Anspruch 1 oder 2, bei dem das beim Mischen verwendete (a) Bromchlorid ist.

4. Verfahren zur Ausrottung oder mindestens Reduzierung von Pseudomonas aeruginosa-Biofilm auf einer Oberfläche, wobei der Biofilm extrazelluläres Polysaccharid enthält, wobei das Verfahren die Zugabe einer mikrobiozid wirkenden Menge mindestens eines in Wasser löslichen wirksamen Bromprodukts zu dem wässrigen Medium umfaßt, das mit dem Biofilm in Kontakt steht, wobei das Bromprodukt gebildet worden ist, indem (a) Brom, Bromchlorid, eine Mischung aus Bromchlorid und Brom oder eine Kombination von Brom und Chlor, in der die molare Menge von Chlor nicht die molare Menge von Brom übersteigt, und (b) eine wasserlösliche Quelle von Sulfamatanion in (c) einem wässrigen Medium, das ein wässriges Medium ist, das auf einen pH-Wert von mindestens 12 entweder während oder nach dem Vermischen eingestellt worden ist, gemischt werden, wobei das Inkontaktbringen eine oder mehrere Perioden lang erfolgt, die lang genug sind, um den Biofilm auszurotten oder mindestens zu reduzieren, und bei dem das Inkontaktbringen zwischen dem Biofilm und dem wässrigen mikrobiziden Medium von dem Alter der Kolonie des Pseudomonas aeruginosa-Biofilms abhängt, und je älter die Kolonie ist, desto länger ist die Kontaktzeit.

5. Verfahren nach Anspruch 4, bei dem der Biofilm mindestens einen zusätzlichen krankheitserregenden Organismus umfaßt.

6. Verfahren nach Anspruch 4 oder 5, bei dem das beim Mischen verwendete (a) Bromchlorid ist.

7. Verwendung mindestens eines in Wasser löslichen wirksamen Bromprodukts, das gebildet wird, indem (a) Brom, Bromchlorid, eine Mischung aus Bromchlorid und Brom oder eine Kombination von Brom und Chlor, in der die molare Menge von Chlor nicht die molare Menge von Brom übersteigt, und (b) eine wasserlösliche Quelle von Sulfamatanion in (c) einem wässrigen Medium, das ein wässriges Medium ist, das auf einen pH-Wert von mindestens 12 entweder während oder nach dem Vermischen eingestellt worden ist, gemischt werden, um den Pseudomonas aeruginosa-Biofilm auf einer Oberfläche auszurotten oder zumindest zu reduzieren, wobei der Biofilm extrazelluläres Polysaccharid umfaßt, indem der Biofilm mit einem wässrigen Medium oder Wasser in Kontakt gebracht wird, in das eine mikrobiozid wirkende Menge des in Wasser löslichen wirksamen Bromprodukts eingeführt worden ist, wobei das Inkontaktbringen für eine oder mehrere Perioden erfolgt, die lang genug sind, um den Biofilm auszurotten oder zumindest zu reduzieren, und das Inkontaktbringen zwischen dem Biofilm und dem wässrigen mikrobioziden Medium von dem Alter der Kolonie des Pseudomonas aeruginosa-Biofilms abhängt, und je älter die Kolonie ist, desto länger ist die Kontaktzeit.

8. Verwendung nach Anspruch 7, bei dem das beim Mischen verwendete (a) Bromchlorid ist.

## Revendications

1. Procédé d'éradication ou au moins de réduction d'un biofilm de *Pseudomonas aeruginosa* sur une surface, ledit biofilm contenant un polysaccharide extracellulaire, lequel procédé comprend la mise en contact dudit biofilm avec un milieu aqueux ou de l'eau dans lequel/laquelle a été introduite une quantité microbiologiquement efficace d'au moins un produit de brome actif hydrosoluble formé en mélangeant (a) du brome, du chlorure de brome, un mélange de chlorure de brome et de brome ou une combinaison de brome et de chlore dans laquelle la quantité molaire de chlore ne dépasse par la quantité molaire de brome, et (b) une source hydrosoluble d'anion sulfamate, dans (c) un milieu aqueux, lequel milieu aqueux est ajusté à un pH d'au moins 12 soit durant ou après un tel mélange, ladite mise en contact étant effectuée durant une ou plusieurs périodes suffisamment longue(s) pour éradiquer ou au moins réduire ledit biofilm et où ladite mise en contact entre ledit biofilm et ledit milieu aqueux microbiocide dépend de l'âge de la colonie du biofilm de *Pseudomonas aeruginosa,* plus la colonie est ancienne, plus la durée de contact est longue.

2. Procédé selon la revendication 1 dans lequel ledit biofilm comprend au moins un organisme pathogène supplémentaire.

3. Procédé selon la revendication 1 ou 2 dans lequel (a) utilisé dans ledit mélange est le chlorure de brome.

4. Procédé d'éradication ou au moins de réduction d'un biofilm de *Pseudomonas aeruginosa* sur une surface, ledit biofilm contenant un polysaccharide extracellulaire, lequel procédé comprend l'addition au milieu aqueux en contact avec ledit biofilm, d'une quantité microbiocide efficace d'au moins un produit de brome actif hydrosoluble formé en mélangeant (a) du brome, du chlorure de brome, un mélange de chlorure de brome et de brome ou une combinaison de brome et de chlore dans laquelle la quantité molaire de chlore ne dépasse par la quantité molaire de brome, et (b) une source hydrosoluble d'anion sulfamate, dans (c) un milieu aqueux, lequel milieu aqueux est ajusté à un pH d'au moins 12 soit durant ou après un tel mélange, ladite mise en contact étant effectuée durant une ou plusieurs périodes suffisamment longue(s) pour éradiquer ou au moins réduire ledit biofilm et où ladite mise en contact entre ledit biofilm et ledit milieu aqueux microbiocide dépend de l'âge de la colonie du biofilm de *Pseudomonas aeruginosa,* plus la colonie est ancienne, plus la durée de contact est longue.

5. Procédé selon la revendication 4 dans lequel ledit biofilm comprend au moins un organisme pathogène supplémentaire.

6. Procédé selon la revendication 4 ou 5 dans lequel (a) utilisé dans ledit mélange est le chlorure de brome.

7. Utilisation d'au moins un produit de brome actif hydrosoluble formé en mélangeant (a) du brome, du chlorure de brome, un mélange de chlorure de brome et de brome ou une combinaison de brome et de chlore dans laquelle la quantité molaire de chlore ne dépasse par la quantité molaire de brome, et (b) une source hydrosoluble d'anion sulfamate, dans (c) un milieu aqueux, lequel milieu aqueux est ajusté à un pH d'au moins 12 soit durant ou après un tel mélange, pour éradiquer ou au moins réduire un biofilm de *Pseudomonas aeruginosa* sur une surface, ledit biofilm contenant un polysaccharide extracellulaire, par le biais d'une mise en contact dudit biofilm avec un milieu aqueux ou de l'eau dans lequel/laquelle a été introduite une quantité microbiocide efficace dudit produit de brome actif hydrosoluble, ladite mise en contact étant effectuée durant une ou plusieurs périodes suffisamment longue(s) pour éradiquer ou au moins réduire ledit biofilm et où ladite mise en contact entre ledit biofilm et ledit milieu aqueux microbiocide dépend de l'âge de la colonie du biofilm de *Pseudomonas aeruginosa,* plus la colonie est ancienne, plus la durée de contact est longue.

8. Procédé selon la revendication 7 dans lequel (a) utilisé dans ledit mélange est le chlorure de brome.
